(19) Europäisches Patentamt
European Patent Office
Office européen des brevets

(11) EP 1 679 816 A1

(12) EUROPEAN PATENT APPLICATION

(43) Date of publication:
12.07.2006 Bulletin 2006/28

(51) Int Cl.:
*H04L 1/06* (2006.01)

(21) Application number: 06000335.7

(22) Date of filing: 09.01.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 07.01.2005 KR 2005001466
09.03.2005 KR 2005019859

(71) Applicant: Samsung Electronics Co., Ltd.
Suwon-si, Gyeonggi-Do (KR)

(72) Inventors:
- Yun, Sung-Ryul
Yeongtong-gu
Suwon-si
Gyeonggi-do (KR)
- Chae, Chan-Byoung
Jongro-ku
Seoul (KR)
- Jeong, Hong-Sil
Kwanak-gu
Seoul (KR)
- Roh, Won-Il
Sinbong-dong,
Yongin-si,
Gyeonggi-do (KR)
- Oh, Jeong-Tae
Yongin-si,
Gyeonggi-do (KR)
- Ko, Kyun-Byoung
Taean-eub,
Hwasung-si
Gyeonggi-do (KR)
- Jung, Young-Ho
Youngsan-gu,
Seoul (KR)
- Nam, Seung-Hoon
Yangcheon-gu,
Seoul (KR)
- Chung, Jae-Hak
Jongro-ku
Seoul (KR)

(74) Representative: Grünecker, Kinkeldey,
Stockmair & Schwanhäusser
Anwaltssozietät
Maximilianstrasse 58
80538 München (DE)

# (54) Apparatus and method for space-time-frequency block coding in a wireless communication system

(57) A Space-Time-Frequency Block Coding (STFBC) encoding apparatus and method for a wireless communication system are provided. In a transmitter using a plurality of transmit antennas, an encoder encodes an input symbol sequence according to a predetermined space-time coding matrix. An antenna circulator selects one of predetermined permutation matrices according to a predetermined formula and generates a plurality of symbol vectors by permuting the space-time coded symbols according to the selected permutation matrix.

EP 1 679 816 A1

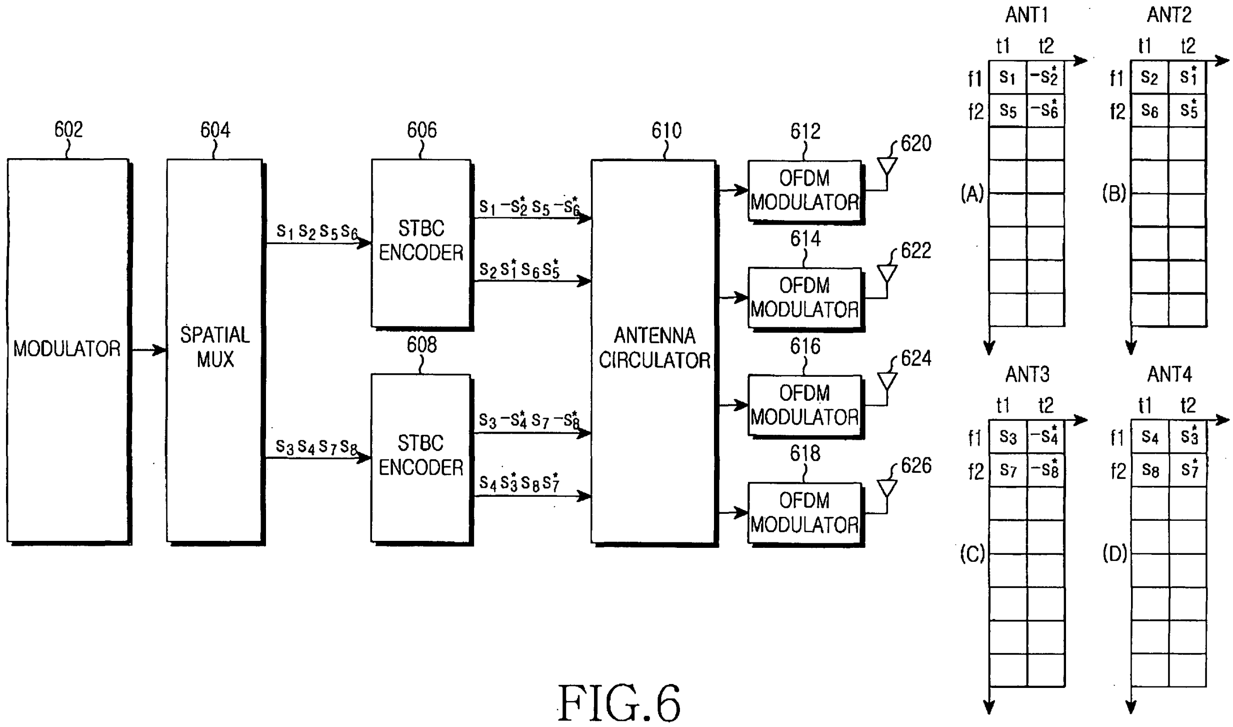
602
604
606
608
610
612
614
616
618
620
622
624
626
MODULATOR
SPATIAL MUX
STBC ENCODER
STBC ENCODER
ANTENNA CIRCULATOR
OFDM MODULATOR
OFDM MODULATOR
OFDM MODULATOR
OFDM MODULATOR
ANT1
ANT2
ANT3
ANT4
t1 t2
f1
f2
(A)
(B)
(C)
(D)

FIG.6

## Description

This application claims priority under 35 U.S.C. § 119 to an application entitled "Apparatus And Method For Space-Time-Frequency Block Coding In A Wireless Communication System" filed in the Korean Intellectual Property Office on January 7, 2005 and assigned Serial No. 2005-1466, and an application entitled "Apparatus And Method For Space-Time-Frequency Block Coding In A Wireless Communication System" filed in the Korean Intellectual Property Office on March 9, 2005 and assigned Serial No. 2005-19859, the contents of which are incorporated herein by reference.

## BACKGROUND OF THE INVENTION

### 1. Field of the Invention

The present invention relates generally to a Multiple Input Multiple Output (MIMO) wireless communication system, and in particular, to an apparatus and method for Space-Time-Frequency Block Coding (STFBC) in a Multiple Input Multiple Output-Orthogonal Frequency Division Multiplexing (MIMO-OFDM) communication system.

### 2. Description of the Related Art

The fundamental issue in communications is how efficiently and reliably data is transmitted on channels. Future-generation multimedia mobile communications, which have been under active study in recent years, require high-speed communication systems capable of transmitting a variety of information including video and wireless data beyond the voice-focused service. Therefore, it is very significant to increase system efficiency by use of a channel coding method suitable for the systems.

Generally, in the wireless channel environment of a mobile communication system, unlike a wired channel environment, a transmission signal inevitably experiences loss due to several factors such as multipath interference, shadowing, wave attenuation, time-variant noise, and fading. The information loss causes a severe distortion to the transmission signal, degrading the whole system performance. In order to reduce the information loss, many error control techniques are usually adopted for increased system reliability. The basic error control to technique is to use an error correction code.

Multipath fading is relieved by diversity techniques in the wireless communication system. The diversity techniques are broken up into time diversity, frequency diversity, and antenna diversity.

The antenna diversity uses multiple antennas. This diversity scheme is further branched into receive (Rx) antenna diversity using a plurality of Rx antennas, transmit (Tx) antenna diversity using a plurality of Tx antennas, and MIMO using a plurality of Tx antennas and a plurality of Rx antennas.

MIMO is a special case of Space-Time Coding (STC) that extends coding of the time domain to the space domain by transmission of a signal encoded in a predetermined coding method through a plurality of Tx antennas, with the aim to achieve a lower error rate.

V. Tarokh, et al. proposed Space-Time Block Coding (STBC) as one of methods of efficiently applying antenna diversity (see "Space-Time Block Coding from Orthogonal Designs", IEEE Trans. On Info., Theory, Vol. 45, pp. 1456-1467, July 1999). The Tarokh STBC scheme is an extension of the transmit antenna diversity scheme of S.M. Alamouti (see, "A Simple Transmit Diversity Technique for Wireless Communications", IEEE Journal on Selected Area in Communications, Vol. 16, pp.1451-1458, October 1988), for two or more Tx antennas.

FIG 1 is a block diagram of a transmitter in a wireless communication system using the conventional Tarokh STBC scheme. The transmitter is comprised of a modulator 100, a serial-to-parallel (S/P) converter 102, an STBC encoder 104, and four Tx antennas 106, 108, 110 and 112.

Referring to FIG. 1, the modulator 100 modulates input information data (or coded data) in a predetermined modulation scheme. The modulation scheme can be one of Binary Phase Shift Keying (BPSK), Quadrature Phase Shift Keying (QPSK), Quadrature Amplitude Modulation (QAM), Pulse Amplitude Modulation (PAM), and Phase Shift Keying (PSK).

The S/P converter 102 parallelizes serial modulation symbols $s_1$, $s_2$, $s_3$, $s_4$ received from the modulator 100. The STBC encoder 104 creates eight symbol combinations by STBC-encoding the four modulation symbols $s_1$, $s_2$, $s_3$, $s_4$ and sequentially transmits them through the four Tx antennas 106 to 112. A coding matrix used to generate the eight symbol combinations is expressed as Equation (1):

$$G_4 = \begin{bmatrix} s_1 & s_2 & s_3 & s_4 \\ -s_2 & s_1 & -s_4 & s_3 \\ -s_3 & s_4 & s_1 & -s_2 \\ -s_4 & -s_3 & s_2 & s_1 \\ s_1^* & s_2^* & s_3^* & s_4^* \\ -s_2^* & s_1^* & -s_4^* & s_3^* \\ -s_3^* & s_4^* & s_1^* & -s_2^* \\ -s_4^* & -s_3^* & s_2^* & s_1^* \end{bmatrix} \quad \ldots\ldots(1)$$

where $G_4$ denotes the coding matrix for symbols transmitted through the four Tx antennas 106 to 112 and $s_1$, $s_2$, $s_3$, $s_4$ denote the input four symbols to be transmitted. The columns of the coding matrix represent the Tx antennas and the rows represent time intervals required to transmit the four symbols. Thus, the four symbols are transmitted through the four Tx antennas for eight time intervals.

Specifically, for a first time interval, $s_1$ is transmitted through the first Tx antenna 106, $s_2$ through the second Tx antenna 108, $s_3$ through the third Tx antenna 110, and $s_4$ through the fourth Tx antenna 112. In this manner, $-s_4^*$, $-s_3^*$, $s_2^*$, $s_1^*$ are transmitted through the first to fourth Tx antennas 106 to 112, respectively for an eighth time interval. That is, the STBC encoder 104 sequentially provides the symbols of an $i^{th}$ column in the coding matrix to an $i^{th}$ Tx antenna.

As described above, the STBC encoder 104 generates the eight symbol sequences using the input four symbols and their conjugates and negatives and transmits them through the four Tx antennas 106 to 112 for eight time intervals. Since the symbol sequences for the respective Tx antennas, that is, the columns of the coding matrix are mutually orthogonal, as high a diversity gain as a diversity order is achieved.

FIG. 2 is a block diagram of a receiver in the wireless communication system using the conventional STBC scheme. The receiver is the counterpart of the transmitter illustrated in FIG. 1.

The receiver is comprised of a plurality of Rx antennas 200 to 202, a channel estimator 204, a signal combiner 206, a detector 208, a parallel-to-serial (P/S) converter 210, and a demodulator 212.

Referring to FIG. 2, the first to $P^{th}$ Rx antennas 200 to 202 provide signals received from the four Tx antennas of the transmitter illustrated in FIG. 1 to the channel estimator 204 and the signal combiner 206. The channel estimator 204 estimates channel coefficients representing channel gains from the Tx antennas 106 to 112 to the Rx antennas 200 to 202 using the signals received from the first to $P^{th}$ Rx antennas 200 to 202. The signal combiner 206 combines the signals received from the first to $P^{th}$ Rx antennas 200 to 202 with the channel coefficients in a predetermined method. The detector 208 generates hypothesis symbols by multiplying the combined symbols by the channel coefficients, calculates decision statistics over all possible transmitted symbols from the transmitter using the hypothesis symbols, and detects the actual transmitted symbols through threshold detection. The P/S converter 210 serializes the parallel symbols received from the detector 208. The demodulator 212 demodulates the serial symbol sequence in a predetermined demodulation method, thereby recovering the original information bits.

As described above, the Tarokh STBC scheme extended from the Alamouti STBC scheme achieves a full diversity order using an STBC in the form of a matrix with orthogonal columns, as described with reference to FIGs. 1 and 2. However, because four complex symbols are transmitted for eight time intervals, the Tarokh STBC scheme brings a decrease by half in data rate. In addition, since it takes eight time intervals to completely transmit one block of four complex symbols, reception performance is degraded due to channel changes within the block over a fast fading channel. In other words, the transmission of complex symbols through four or more Tx antennas requires 2N time intervals for N symbols, causing a longer latency and a decrease in data rate.

To achieve a full rate in a MIMO system that transmits a complex signal through three or more Tx antennas, the Giannakis group presented a Full-Diversity, Full-Rate (FDFR) STBC for four Tx antennas using constellation rotation over a complex field.

FIG. 3 is a block diagram of a transmitter in a mobile communication system using a conventional Giannakis STBC scheme. As illustrated in FIG. 3, the transmitter includes a modulator 300, a pre-coder 302, a space-time mapper 304, and a plurality of Tx antennas 306, 308, 310 and 312. The modulator 300 modulates input information data (or coded data) in a predetermined modulation scheme such as BPSK, QPSK, QAM, PAM or PSK.

The pre-coder 302 pre-encodes $N_t$ modulation symbols received from the modulator 300, $d_1$, $d_2$, $d_3$, $d_4$ such that signal rotation occurs in a signal space, and outputs the resulting $N_t$ symbols. For notational simplicity, four Tx antennas are assumed. Let a sequence of four modulation symbols from the modulator 300 be denoted by d. The pre-coder 302 generates a complex vector r by computing the modulation symbol sequence, d using Equation (2):

$$r = \Theta d = \begin{bmatrix} 1 & \alpha_0^1 & \alpha_0^2 & \alpha_0^3 \\ 1 & \alpha_1^1 & \alpha_1^2 & \alpha_1^3 \\ 1 & \alpha_2^1 & \alpha_2^2 & \alpha_2^3 \\ 1 & \alpha_3^1 & \alpha_3^2 & \alpha_3^3 \end{bmatrix} \begin{bmatrix} d_1 \\ d_2 \\ d_3 \\ d_4 \end{bmatrix} = \begin{bmatrix} r_1 \\ r_2 \\ r_3 \\ r_4 \end{bmatrix} \quad \ldots\ldots (2)$$

where Θ denotes a pre-coding matrix. The Giannakis group uses a Vandermonde matrix being a unitary one as the pre-coding matrix. In the pre-coding matrix, $\alpha_i$ is given as Equation (3).

$$\alpha_i = exp\left(j2\pi\left(i + 1/4\right)/4\right), \quad i = 0, 1, 2, 3 \quad \ldots\ldots (3)$$

The Giannakis STBC scheme uses four Tx antennas and is easily extended to more than four Tx antennas, as well. The space-time mapper 304 STBC-encodes the pre-coded symbols according to Equation (4):

$$S = \begin{bmatrix} r_1 & 0 & 0 & 0 \\ 0 & r_2 & 0 & 0 \\ 0 & 0 & r_3 & 0 \\ 0 & 0 & 0 & r_4 \end{bmatrix} \quad \ldots\ldots (4)$$

where S is a coding matrix for symbols transmitted through the four Tx antennas 306 to 312. The columns of the coding matrix represent the Tx antennas and the rows represent time intervals required to transmit the four symbols. That is, the four symbols are transmitted through the four Tx antennas for the four time intervals.

Specifically, for a first time interval, $r_1$ is transmitted through the first Tx antenna 306, with no signals through the other Tx antennas 308, 310 and 312. For a second time interval, $r_2$ is transmitted through the second Tx antenna 308, with no signals through the other Tx antennas 306, 310 and 312. For a third time interval, $r_3$ is transmitted through the third Tx antenna 310, with no signals through the other Tx antennas 306, 308, and 312. For a fourth time interval, $r_4$ is transmitted through the fourth Tx antenna 312, with no signals through the other Tx antennas 306, 308 and 310.

Upon receipt of the four symbols on a radio channel for the four time intervals, a receiver (not shown) recovers the modulation symbol sequence, d by Maximum Likelihood (ML) decoding.

As described above, Spatial Diversity (SD) achieves transmit diversity by transmitting the same data through multiple Tx antennas. A distinctive shortcoming of the SD is that as the Tx antennas increase in number, a diversity order increases at the expense of the increase rate of gain being dropped. In other words, as the number of antennas increases, the diversity order is saturated rather than continuing to increase linearly.

Compared to the SD scheme, Spatial Multiplexing (SM) is a scheme in which different data are transmitted simultaneously using multiple antennas at both a transmitter and a receiver. Therefore, data can be transmitted at higher rate without increasing the bandwidth of the system.

FIG. 4 is a block diagram of a wireless communication system using a conventional SM scheme. A transmitter includes a modulator 400, an S/P converter 402, and four Tx antennas 404, 406, 408 and 410. A receiver includes four Rx antennas 414, 416, 418 and 420 and a reception part 412.

The modulator 400 modulates input information data (or coded data) in a predetermined modulation scheme. Four modulation symbols output from the modulator 400 are denoted by $s_1$, $s_2$, $s_3$ and $s_4$.

The S/P converter 402 spatially multiplexes the symbol sequence received from the modulator 400 using the coding matrix of Equation (5):

$$S = \begin{bmatrix} s_1 \\ s_2 \\ s_3 \\ s_4 \end{bmatrix} \quad \ldots\ldots (5)$$

where the rows of the matrix represent the Tx antennas and the columns represent time intervals required to transmit the four symbols. Since four symbols are transmitted for one time interval, the data rate is 4.

Meanwhile, the reception part 412 of the receiver estimates the four symbols $s_1$, $s_2$, $s_3$ and $s_4$ transmitted by the transmitter using signals received through the four Rx antennas 414, 416, 418 and 420.

The requirement for the SM scheme is that the number of Rx antennas must be equal to or greater than that of Tx antennas. Hence, in the system illustrated in FIG. 4, four Rx antennas are provided for four Tx antennas.

As an example of the SM scheme, Vertical-Bell Laboratories Layered Space Time (V-BLAST) increases data rate in proportion to the number of Tx antennas. However, since no diversity gain is produced, performance is degraded. Moreover, the V-BLAST also requires that the number of Rx antennas is equal to or greater than that of Tx antennas.

To overcome the shortcomings of the SD and SM schemes, they are used in combination. Such an approach is double Space-Time Transmit Diversity (STTD) (i.e. a rate 2 STC). The rate 2 STC scheme is a combination of the SD and SM, which improves both diversity gain and data rate relative to the SD and SM. This double STTD scheme uses feedback channel information for performance improvement.

FIG. 5 is a block diagram of a wireless communication system adopting a conventional rate 2 STC scheme using channel information. A transmitter includes a modulator 500, an S/P converter 502, two STBC encoders 504 and 506, a weighting matrix multiplier 508, and four Tx antennas 510, 512, 514 and 516. A receiver includes two Rx antennas 518 and 520 and a reception part 522.

The modulator 500 modulates input information data (or coded data) in a predetermined modulation scheme. Four modulation symbols output from the modulator 500 are denoted by $s_1$, $s_2$, $s_3$ and $s_4$. The S/P converter 502 parallelizes the four modulation symbols and outputs the first two symbols to the STBC encoder 504 and the last two symbols to the STBC encoder 506.

The STBC encoders 504 and 506 encode their received symbols in the STBC scheme proposed by S. M. Alamouti. After the SM and SD processing, the signal matrix output from the STBC encoders 504 and 506 is expressed as Equation (6):

$$A = \begin{bmatrix} s_1 & -s_2^* \\ s_2 & s_1^* \\ s_3 & -s_4^* \\ s_4 & s_3^* \end{bmatrix} \quad \ldots\ldots (6)$$

where the rows of the signal matrix represent the Tx antennas and the columns represent time intervals required to transmit the four symbols. Since four symbols are transmitted for two time intervals, the data rate is 2.

The weighting matrix multiplier 508 generates four antenna signals by multiplying the signal matrix described in Equation (6) by feedback channel information (i.e. a weighting matrix) received from the receiver and provides the antenna signals to corresponding Tx antennas. Specifically, the weighting matrix multiplier 508 multiplies the STBC-coded signals by the feedback weighting matrix to achieve robustness against correlated channels.

Meanwhile, the reception part 522 of the receiver estimates the four symbols $s_1$, $s_2$, $s_3$ and $s_4$ transmitted by the transmitter using signals received through the two Rx antennas 518 and 520. The reception part 522 also calculates the channel information (i.e. the weighting matrix) and feeds it back to the transmitter.

As described above, despite the advantage of improved diversity gain and data rate relative to the SD and SM schemes, the rate 2 STC scheme requires channel information (i.e. a weighting matrix) to improve performance. A large volume of computation is taken to obtain the weighting matrix, the burden of transmitting the channel estimation to the transmitter without errors is imposed, and overhead arises from the transmission. Moreover, performance improvement cannot be expected in an environment where channel status rapidly changes.

## SUMMARY OF THE INVENTION

An object of the present invention is to substantially solve at least the above problems and/or disadvantages and to provide at least the advantages below. Accordingly, an object of the present invention is to provide an apparatus and method for improving the performance of a rate 2 STBC in a wireless communication system.

Another object of the present invention is to provide an apparatus and method for improving the performance of a rate 2 STBC without using channel information in a wireless communication system.

A further object of the present invention is to provide a Space-Time-Frequency Block Coding (STFBC) encoding apparatus and method for application to an OFDM wireless communication system.

Still another object of the present invention is to provide an apparatus and method for improving the performance of a rate 2 STFBC without using channel information in an OFDM communication system.

The above objects are achieved by providing an STFBC encoding apparatus and method for a wireless communication system.

According to one aspect of the present invention, in a transmitter using a plurality of transmit antennas, an encoder encodes an input symbol sequence according to a predetermined space-time coding matrix. An antenna circulator selects one of predetermined permutation matrices according to a predetermined formula and generates a plurality of symbol vectors by permuting the space-time coded symbols according to the selected permutation matrix.

According to another aspect of the present invention, in a rate 2 space-time encoding apparatus in a transmitter using four transmit antennas, a spatial multiplexer generates a predetermined number of symbol sequences by spatially multiplexing input symbols. A plurality of encoders encode the symbol sequences received from the spatial multiplexer in an Alamouti scheme. An antenna circulator generates a plurality of antenna signals by permuting a signal matrix formed with code symbols received from the plurality of encoders according to a permutation matrix selected by the index of a subcarrier. A plurality of OFDM modulators OFDM-modulate the plurality of antenna signals received form the antenna circulator and transmit OFDM-modulated signals through the transmit antennas.

According to a further aspect of the present invention, in a transmission method in a transmitter using a plurality of transmit antennas, an input symbol sequence is encoded according to a predetermined space-time coding matrix. One of predetermined permutation matrices is selected according to a predetermined formula. A plurality of symbol vectors are generated by permuting the space-time coded symbols according to the selected permutation matrix.

According to still another aspect of the present invention, in a rate 2 space-time encoding method in a transmitter with four transmit antennas, a predetermined number of symbol sequences are generated by spatially multiplexing input symbols. A signal matrix is generated by encoding the symbol sequences in an Alamouti scheme. A plurality of antenna signals are generated by permuting the signal matrix according to a permutation matrix selected by the index of a subcarrier. The plurality of antenna signals are OFDM-modulated and transmitted through the transmit antennas.

## BRIEF DESCRIPTION OF THE DRAWINGS

The above and other objects, features and advantages of the present invention will become more apparent from the following detailed description when taken in conjunction with the accompanying drawings in which:

FIG. 1 is a block diagram of a transmitter in a wireless communication system using a conventional STBC scheme;
FIG. 2 is a block diagram of a receiver in the wireless communication system using the conventional STBC scheme;
FIG. 3 is a block diagram of a transmitter in a wireless communication system using a conventional Giannakis group STBC scheme;
FIG 4 is a block diagram of a wireless communication system using a conventional SD scheme;
FIG 5 is a block diagram of a wireless communication system using a conventional double STTD scheme;
FIG. 6 is a block diagram of a transmitter in an OFDM wireless communication system using a rate 2 Space-Time Frequency Block Coding (STFBC) scheme according to an embodiment of the present invention; and

FIG. 7 is a flowchart illustrating a transmission operation in the transmitter in the OFDM wireless communication system using the rate 2 STFBC scheme according to the embodiment of the present invention.

## DETAILED DESCRIPTION OF THE PREFERRED EMBODIMENT

A preferred embodiment of the present invention will be described herein below with reference to the accompanying drawings. In the following description, well-known functions or constructions are not described in detail since they would obscure the invention in unnecessary detail.

The present invention is intended to provide a rate 2 STBC scheme for improving performance (e.g. Bit Error Rate (BER) performance) without using channel information in a wireless communication system. Particularly, a rate 2 STFBC scheme for an OFDM wireless communication system will be described in detail.

The present invention will be described in the context of a communication system having a transmitter with four Tx antennas and a receiver with two Rx antennas as a promising communication system for 4$^{th}$ generation communications.

While the present invention is applicable to any of Frequency Division Multiple Access (FDMA), Time Division Multiple Access (TDMA), Code Division Multiple Access (CDMA), and OFDM, the OFDM communication system will be taken by way of example in the following description.

FIG. 6 is a block diagram of a transmitter in an OFDM wireless communication system using a rate 2 STFBC scheme according to the present invention.

The transmitter includes a modulator 602, a spatial multiplexer (MUX) 604, two STBC encoders 606 and 608, an antenna circulator 610, four OFDM modulators 612, 614, 616 and 618, and four Tx antennas 620, 622, 624 and 626.

The modulator 602 modulates input information data (or coded data) in a predetermined modulation scheme such as BPSK, QPSK, QAM, PAM or PSK. Eight modulation symbols from the modulator 602 are denoted by $s_1$, $s_2$, $s_3$, $s_4$, $s_5$, $s_6$, $s_7$, $s_8$.

The spatial MUX 604 groups the eight modulation symbols into two vectors each having four elements, $\{s_1, s_2, s_5, s_6\}$ and $\{s_3, s_4, s_7, s_8\}$ by spatial multiplexing. The vectors $\{s_1, s_2, s_5, s_6\}$ and $\{s_3, s_4, s_7, s_8\}$ are provided to the first and second STBC encoders 606 and 608, respectively.

The first and second STBC encoders 606 and 608 encode the received vectors in the Alamouti STBC scheme and output the STBC-coded signals in the form of the signal matrix B of Equation (7).

$$B = \begin{bmatrix} s_1 & -s_2^* & s_5 & -s_6^* \\ s_2 & s_1^* & s_6 & s_5^* \\ s_3 & -s_4^* & s_7 & -s_8^* \\ s_4 & s_3^* & s_8 & s_7^* \end{bmatrix} \quad \ldots\ldots (7)$$

The first two rows are output from the first STBC encoder 606 and the last two rows are output from the second STBC encoder 608. The rows of the signal matrix of Equation (7) represent the Tx antennas 620 to 626 and the columns represent time and frequency. The first two columns are transmitted on subcarrier #1 (f1) and the last two columns are transmitted on subcarner #2 (f2). The first and third columns are transmitted in a first time interval (t=t1) and the second and fourth columns are transmitted in a second time interval (t=t2). For example, $-s_2^*$ is mapped to subcarrier #1 (f1) and transmitted through the first Tx antenna in the second time interval and $s_7$ is mapped to subcarrier #2 (f2) and transmitted through the third Tx antenna in the first time interval.

In the signal matrix B of Equation (7), the first and second Tx antennas are grouped into one group and the third and fourth Tx antennas are grouped into another group with respect to f1 and f2. However, this matrix B will vary depending on the antenna grouping pattern used.

Hence, it can be contemplated that the first and second Tx antennas are grouped into one group and the third and fourth Tx antennas are grouped into another group with respect to f1, while the first and third Tx antennas are grouped into one group and the second and fourth Tx antennas are grouped into another group with respect to f2. Thus, the signal matrix B for this antenna grouping is expressed as Equation (8).

$$B = \begin{bmatrix} s_1 & -s_2^* & s_5 & -s_7^* \\ s_2 & s_1^* & s_7 & s_5^* \\ s_3 & -s_4^* & s_6 & -s_8^* \\ s_4 & s_3^* & s_8 & s_6^* \end{bmatrix}, \quad \ldots\ldots (8)$$

By permuting the sequence of the symbols mapped to f2 in the signal matrix B expressed as Equation (8), the following signal matrix B of Equation (9) is obtained.

$$B = \begin{bmatrix} s_1 & -s_2^* & s_5 & -s_7^* \\ s_2 & s_1^* & s_6 & -s_8^* \\ s_3 & -s_4^* & s_7 & s_5^* \\ s_4 & s_3^* & s_8 & s_6^* \end{bmatrix} \quad \ldots\ldots (9)$$

The antenna circulator 610 permutes the sequence of the symbols in the signal matrix expressed as Equation (7) according to an antenna circulation pattern determined by a subcarrier index and outputs the antenna signals of the permuted matrix to corresponding OFDM modulators. The row by row permutation of the signal matrix created by the STBC encoders 606 and 608 is called "antenna circulation". The antenna circulation enables performance improvement without using channel information.

To be more specific, if a permutation signal matrix is given as Equation (7), the antenna circulator 610 provides the first antenna signal $\{s_1, -s_2^*, s_5, -s_6^*\}$ to the first OFDM modulator 612, the second antenna signal $\{s_2, s_1^*, s_6, s_5^*\}$ to the second OFDM modulator 614, the third antenna signal $\{s_3, -s_4^*, s_7, -s_8^*\}$ to the third OFDM modulator 616, and the fourth antenna signal $\{s_4, s_3^*, s_8, s_7^*\}$ to the fourth OFDM modulator 618.

The first OFDM modulator 612 inverse fast Fourier transform (IFFT)-processes the received symbols by mapping them to corresponding subcarriers in a predetermined rule, upconverts the IFFT signal to an RF signal, and transmits the RF signal through the first Tx antenna 620. If the received symbols are $\{s_1, -s_2^*, s_5, -s_6^*\}$, the symbols $s_1$ and $s_5$ are mapped to subcarrier #1 (f1) and subcarrier #2 (f2), respectively in the first time interval, and the symbols $-s_2^*$ and $-s_6^*$ are mapped to subcarrier #1 (f1) and subcarrier #2 (f2), respectively in the second time interval during the IFFT operation.

The second OFDM modulator 614 IFFT-processes the received symbols by mapping them to corresponding subcarriers in the predetermined rule, upconverts the IFFT signal to an RF signal, and transmits the RF signal through the second Tx antenna 622. If the received symbols are $\{s_2, s_1^*, s_6, s_5^*\}$, the symbols $s_2$ and $s_6$ are mapped to subcarrier #1 (f1) and subcarrier #2 (f2), respectively in the first time interval, and the symbols $s_1^*$ and $s_5^*$ are mapped to subcarrier #1 (f1) and subcarrier #2 (f2), respectively in the second time interval during the IFFT operation.

In the same manner, the third and fourth OFDM modulators 616 and 618 IFFT-process their received symbols by mapping them to corresponding subcarriers according to the predetermined rule, upconvert the IFFT signals to RF signals, and transmit the RF signals through corresponding Tx antennas.

In FIG. 6, reference characters (A), (B), (C) and (D) denote symbols to be transmitted through the first to fourth Tx antennas 620 to 626, expressed in a time-frequency domain.

As described above, every predetermined number of (eight) symbols are spatially multiplexed into two groups, a signal matrix created by STBC-encoding the two groups is permuted according to an antenna circulation pattern determined by a subcarrier index, and the symbols are transmitted in a corresponding time-space-frequency area according to the permutation matrix in the present invention.

In the present invention, the antenna circulator 610 permutes the signal matrix produced by the two STBC encoders 606 and 608 according to a subcarrier index and outputs antenna signals in the rows of the permuted matrix to the corresponding OFDM modulators 612 to 618.

In another embodiment of the present invention, the antenna circulator 610 is so configured to output the symbols of the permutation matrix in corresponding time intervals. For example, if the permutation matrix is given as Equation (7), the antenna circulator 610 provides, in the first time interval, the symbols $s_1$ and $s_5$ to the first OFDM modulator 612, the symbols $s_2$ and $s_6$ to the second OFDM modulator 614, the symbols $s_3$ and $s_7$ to the third OFDM modulator 616, and the symbols $s_4$ and $s_8$ to the fourth OFDM modulator 618. In the second time interval, the antenna circulator 610 provides the symbols $-s_2^*$ and $-s_6^*$ to the first OFDM modulator 612, the symbols $s_1^*$ and $s_5^*$ to the second OFDM modulator 614, the symbols $-s_4^*$ and $-s_8^*$ to the third OFDM modulator 616, and the symbols $s_3^*$ and $s_7^*$ to the fourth OFDM modulator 618. The OFDM modulators 612 to 618 each IFFT-process the received two symbols by mapping them to two predetermined adjacent subcarriers, upconvert the IFFT signal to an RF signal, and transmit the RF signal through a predetermined antenna.

In a third embodiment of the present invention, the antenna circulator 610 outputs each row (i.e. each antenna signal) of the signal matrix created by the two STBC encoders 606 and 608 to an OFDM modulator according to a selected antenna circulation pattern. For instance, if the signal matrix is given as Equation (7) and the selected antenna circulation pattern is $B_2$ (refer to Table 1 below), the antenna circulator 610 outputs the first row of the signal matrix to the first OFDM modulator 612, the second row to the second OFDM modulator 614, the third row to the fourth OFDM modulator 618, and the fourth row to the third OFDM modulator 616.

Now a detailed description will be made of the main element of the present invention, "antenna circulation".

For four Tx antennas, permutation patterns can be produced by antenna circulation in the following way. Given the 4x4 matrix of Equation (7), 4! permutation patterns [1 2 3 4] to [4 3 2 1] are possible by row by row permutation. However, only six permutation patterns are available under the following properties. The numeral in a bracket denotes a row index. Thus [4 3 2 1] means the permutation of exchanging the first row with the fourth row and exchanging the second row with the third row.

Property 1: the Mean Square Error (MSE) is equal irrespective of the position of an STBC block. For example, [1 2 3 4] is grouped into [(1 2) (3 4)] and the MSE of [(1 2) (3 4)] is equal to that of [(3 4) (1 2)].

Property 2: the MSE is equal even though the elements of every STBC pair are exchanged in position. For example, [1 2 3 4] is grouped into [(1 2) (3 4)] and the MSE of [(1 2) (3 4)] is equal to that of [(2 1) (4 3)].

Due to the above properties, six permutation patterns (i.e. antenna circulation patterns) shown in Table 1 below are available in a system using four Tx antennas and two Rx antennas.

Table 1

| Antenna circulation pattern |
|---|
| $B_1$=[(1 2) (3 4)] |
| $B_2$=[(1 2) (4 3)] |
| $B_3$=[(1 3) (2 4)] |
| $B_4$=[(1 4)(2 3)] |
| $B_5$=[(1 3)(4 2)] |
| $B_6$=[(1 4) (3 2)] |

According to these antenna circulation patterns $B_1$ to $B_6$, therefore, the signal matrix B represented as Equation (7) is permuted into Equation (10):

$$B_1 = \begin{bmatrix} s_1 & -s_2^* & s_5 & -s_6^* \\ s_2 & s_1^* & s_6 & s_5^* \\ s_3 & -s_4^* & s_7 & -s_8^* \\ s_4 & s_3^* & s_8 & s_7^* \end{bmatrix}$$

$$B_2 = \begin{bmatrix} s_1 & -s_2^* & s_5 & -s_6^* \\ s_2 & s_1^* & s_6 & s_5^* \\ s_4 & s_3^* & s_8 & s_7^* \\ s_3 & -s_4^* & s_7 & -s_8^* \end{bmatrix}$$

$$B_3 = \begin{bmatrix} s_1 & -s_2^* & s_5 & -s_6^* \\ s_3 & -s_4^* & s_7 & -s_8^* \\ s_2 & s_1^* & s_6 & s_5^* \\ s_4 & s_3^* & s_8 & s_7^* \end{bmatrix}$$

$$B_4 = \begin{bmatrix} s_1 & -s_2^* & s_5 & -s_6^* \\ s_4 & s_3^* & s_8 & s_7^* \\ s_2 & s_1^* & s_6 & s_5^* \\ s_3 & -s_4^* & s_7 & -s_8^* \end{bmatrix}$$

$$B_5 = \begin{bmatrix} s_1 & -s_2^* & s_5 & -s_6^* \\ s_3 & -s_4^* & s_7 & -s_8^* \\ s_4 & s_3^* & s_8 & s_7^* \\ s_2 & s_1^* & s_6 & s_5^* \end{bmatrix}$$

$$B_6 = \begin{bmatrix} s_1 & -s_2^* & s_5 & -s_6^* \\ s_4 & s_3^* & s_8 & s_7^* \\ s_3 & -s_4^* & s_7 & -s_8^* \\ s_2 & s_1^* & s_6 & s_5^* \end{bmatrix}$$

..... (10)

As noted from Table 1 and Equation (10), the antenna circulation pattern $B_1$ means using the signal matrix created by the two STBC encoders 606 and 608. The antenna circulation pattern $B_2$ means exchanging the third row with the fourth row in the signal matrix and the antenna circulation pattern $B_3$ means exchanging the second row with the third row in the signal matrix.

For the signal matrix described by Equation (9), the permutation matrices corresponding to the antenna circulation patterns $B_1$ to $B_6$ are expressed as Equation (11):

$$B_1 = \begin{bmatrix} s_1 & -s_2^* & s_5 & -s_7^* \\ s_2 & s_1^* & s_6 & -s_8^* \\ s_3 & -s_4^* & s_7 & s_5^* \\ s_4 & s_3^* & s_8 & s_6^* \end{bmatrix}$$

$$B_2 = \begin{bmatrix} s_1 & -s_2^* & s_5 & -s_7^* \\ s_2 & s_1^* & s_6 & -s_8^* \\ s_4 & s_3^* & s_8 & s_6^* \\ s_3 & -s_4^* & s_7 & s_5^* \end{bmatrix}$$

$$B_3 = \begin{bmatrix} s_1 & -s_2^* & s_5 & -s_7^* \\ s_3 & -s_4^* & s_7 & s_5^* \\ s_2 & s_1^* & s_6 & -s_8^* \\ s_4 & s_3^* & s_8 & s_6^* \end{bmatrix}$$

$$B_4 = \begin{bmatrix} s_1 & -s_2^* & s_5 & -s_7^* \\ s_4 & s_3^* & s_8 & s_6^* \\ s_2 & s_1^* & s_6 & -s_8^* \\ s_3 & -s_4^* & s_7 & s_5^* \end{bmatrix}$$

$$B_5 = \begin{bmatrix} s_1 & -s_2^* & s_5 & -s_7^* \\ s_3 & -s_4^* & s_7 & s_5^* \\ s_4 & s_3^* & s_8 & s_6^* \\ s_2 & s_1^* & s_6 & -s_8^* \end{bmatrix}$$

$$B_6 = \begin{bmatrix} s_1 & -s_2^* & s_5 & -s_7^* \\ s_4 & s_3^* & s_8 & s_6^* \\ s_3 & -s_4^* & s_7 & s_5^* \\ s_2 & s_1^* & s_6 & -s_8^* \end{bmatrix} \quad \ldots\ldots(11)$$

The present invention characteristically determines an antenna circulation pattern according to a subcarrier index expressed by Equation (12):

$$B_k : k = mod\left(floor\left(Nc - 1\right)/2, 6\right) + 1 \qquad \ldots\ldots(12)$$

where Nc denotes the index of a logical data subcarrier and Nc={1, 2, 3 ... N}. As noted from Equation (9), one antenna circulation pattern is determined per two subcarriers. That is, the pattern $B_1$ is used for f1 and f2, the pattern $B_2$ is used for f3 and f4, and the pattern $B_3$ is used for f5 and f6.

FIG. 7 is a flowchart illustrating a transmission operation in the transmitter in the OFDM wireless communication system using the rate 2 STFBC scheme according to the present invention. The transmitter receives transmission symbols in step 700. In step 702, the transmitter groups the received symbols by eights $\{s_1, s_2, s_3, s_4, s_5, s_6, s_7, s_8\}$ and generates two vectors $\{s_1, s_2, s_5, s_6\}$ and $\{s_3, s_4, s_7, s_8\}$ for each symbol group through spatial multiplexing. The transmitter maps the two vectors in a time-space-frequency domain through Alamouti coding and thus generates four antenna signals in step 704. The resulting signal matrix from the space-time-frequency mapping is Equation (7), for example.

In step 706, the transmitter determines subcarriers to which the symbols are mapped, determines an antenna circulation pattern by computing Equation (12) using the indexes of the subcarriers, and permutes the signal matrix according to the antenna circulation pattern. Assuming that the eight symbols are mapped to f1 and f2, the antenna circulation pattern is $B_1$ in Table 1.

After the permutation, the transmitter IFFT-processes the four antenna signals of the permutation matrix by allocating them to the subcarriers in a predetermined rule and then upconverts the IFFT signals to RF signals, for OFDM modulation in step 708. Each of the four antenna signals has four symbols. The first and third of the four symbols are allocated to f1 and f2, respectively in the first time interval and the second and third symbols are allocated to f1 and f2, respectively in the second time interval during the IFFT operation.

In step 710, the transmitter transmits the four OFDM modulation signals through corresponding Tx antennas. These signals arrive at the receiver on channels. The receiver, which already has knowledge of the antenna circulation pattern used in the transmitter, can recover the received signals.

In the case where signals are transmitted in the above-described algorithm, the input signals, the subcarriers, and the antenna circulation patterns are in the mapping relationship of Table 2.

Table 2

| Input signal | Subcarrier | Antenna circulation pattern |
|---|---|---|
| $s_1$ to $s_8$ | f1, f2 | $B_1$ |
| $s_9$ to $s_{16}$ | f3, f4 | $B_2$ |
| $s_{17}$ to $s_{24}$ | f5, f6 | $B_3$ |
| ⋮ | ⋮ | ⋮ |

Table 2 reveals that different antenna circulation patterns are used for different subcarriers in the present invention. Therefore, deep fading caused by some defects in a Tx antenna (or a channel) can be distributed.

As described above, the present invention advantageously improves the performance of an STFBC by use of simple antenna circulation without the need for using feedback information (or channel information) received from a receiver. Particularly the performance improvement is achieved without additional channel information in a rate 2 STFBC which offers an SM gain equal to half the number of Tx antennas per unit time and also offers a transmit diversity gain of 2 by transmission of each symbol through two Tx antennas.

While the invention has been shown and described with reference to a certain preferred embodiment thereof, it will be understood by those skilled in the art that various changes in form and details may be made therein without departing from the spirit and scope of the invention as defined by the appended claims.

## Claims

**1.** A transmitter using a plurality of transmit antennas, comprising:

an encoder for encoding an input symbol sequence according to a predetermined space-time coding matrix; and an antenna circulator for selecting one of predetermined permutation matrices according to a predetermined formula and generating a plurality of symbol vectors by permuting the space-time coded symbols according to the selected permutation matrix.

**2.** The transmitter of claim 1, further comprising a plurality of orthogonal frequency division multiplexing (OFDM) modulators for mapping the plurality of symbol vectors received from the antenna circulator to predetermined time intervals and predetermined subcarriers and transmitting the mapped symbol vectors through the transmit antennas.

**3.** The transmitter of claim 2, wherein the plurality of OFDM modulators allocates odd-numbered symbols among four symbols forming each of the symbol vectors to two predetermined subcarriers in a first time interval and even-numbered symbols to the two subcarriers in a second time interval through OFDM modulation.

**4.** The transmitter of claim 1, wherein the encoder includes:

a spatial multiplexer for generating two symbol vectors by spatially multiplexing the input symbols; and two Alamouti encoders for encoding the two symbol vectors in an Alamouti scheme.

**5.** The transmitter of claim 1, wherein the predetermined space-time coding matrix is

$$B = \begin{bmatrix} s_1 & -s_2^* & s_5 & -s_7^* \\ s_2 & s_1^* & s_6 & -s_8^* \\ s_3 & -s_4^* & s_7 & s_5^* \\ s_4 & s_3^* & s_8 & s_6^* \end{bmatrix}.$$

**6.** The transmitter of claim 1, wherein the selected permutation matrix is one of the following matrices

$$B_1 = \begin{bmatrix} s_1 & -s_2^* & s_5 & -s_7^* \\ s_2 & s_1^* & s_6 & -s_8^* \\ s_3 & -s_4^* & s_7 & s_5^* \\ s_4 & s_3^* & s_8 & s_6^* \end{bmatrix}$$

$$B_2 = \begin{bmatrix} s_1 & -s_2^* & s_5 & -s_7^* \\ s_2 & s_1^* & s_6 & -s_8^* \\ s_4 & s_3^* & s_8 & s_6^* \\ s_3 & -s_4^* & s_7 & s_5^* \end{bmatrix}$$

$$B_3 = \begin{bmatrix} s_1 & -s_2^* & s_5 & -s_7^* \\ s_3 & -s_4^* & s_7 & s_5^* \\ s_2 & s_1^* & s_6 & -s_8^* \\ s_4 & s_3^* & s_8 & s_6^* \end{bmatrix}$$

$$B_4 = \begin{bmatrix} s_1 & -s_2^* & s_5 & -s_7^* \\ s_4 & s_3^* & s_8 & s_6^* \\ s_2 & s_1^* & s_6 & -s_8^* \\ s_3 & -s_4^* & s_7 & s_5^* \end{bmatrix}$$

$$B_5 = \begin{bmatrix} s_1 & -s_2^* & s_5 & -s_7^* \\ s_3 & -s_4^* & s_7 & s_5^* \\ s_4 & s_3^* & s_8 & s_6^* \\ s_2 & s_1^* & s_6 & -s_8^* \end{bmatrix}$$

$$B_6 = \begin{bmatrix} s_1 & -s_2^* & s_5 & -s_7^* \\ s_4 & s_3^* & s_8 & s_6^* \\ s_3 & -s_4^* & s_7 & s_5^* \\ s_2 & s_1^* & s_6 & -s_8^* \end{bmatrix}$$

**7.** The transmitter of claim 1, wherein if the index of a logical data subcarrier is Nc (=1, 2, 3, ... number of total subcarriers), a permutation matrix $B_k$ is selected according to the formula

$$B_k : k = mod\left(floor\left(Nc-1\right)/2,6\right)+1 .$$

**8.** A rate 2 space-time encoding apparatus in a transmitter using four transmit antennas, comprising:

a spatial multiplexer for generating a predetermined number of symbol sequences by spatially multiplexing input symbols;
a plurality of encoders for encoding the symbol sequences received from the spatial multiplexer in an Alamouti scheme;
an antenna circulator for generating a plurality of antenna signals by permuting a signal matrix formed with code symbols received from the plurality of encoders according to a permutation matrix selected by an index of a subcarrier; and
a plurality of orthogonal frequency division multiplexing (OFDM) modulators for OFDM-modulating the plurality of antenna signals received form the antenna circulator and transmitting OFDM-modulated signals through the transmit antennas.

**9.** The rate 2 space-time encoding apparatus of claim 8, wherein the signal matrix formed with the code symbols is

$$B = \begin{bmatrix} s_1 & -s_2^* & s_5 & -s_7^* \\ s_2 & s_1^* & s_6 & -s_8^* \\ s_3 & -s_4^* & s_7 & s_5^* \\ s_4 & s_3^* & s_8 & s_6^* \end{bmatrix}.$$

**10.** The rate 2 space-time encoding apparatus of claim 8, wherein if the index of a logical data subcarrier is Nc (=1, 2, 3, ... number of total subcarriers), a permutation matrix $B_k$ is selected according to the following formula

$$B_k : k = mod(floor(Nc-1)/2,6)+1$$

$$B_1 = \begin{bmatrix} s_1 & -s_2^* & s_5 & -s_7^* \\ s_2 & s_1^* & s_6 & -s_8^* \\ s_3 & -s_4^* & s_7 & s_5^* \\ s_4 & s_3^* & s_8 & s_6^* \end{bmatrix}$$

$$B_2 = \begin{bmatrix} s_1 & -s_2^* & s_5 & -s_7^* \\ s_2 & s_1^* & s_6 & -s_8^* \\ s_4 & s_3^* & s_8 & s_6^* \\ s_3 & -s_4^* & s_7 & s_5^* \end{bmatrix}$$

$$B_3 = \begin{bmatrix} s_1 & -s_2^* & s_5 & -s_7^* \\ s_3 & -s_4^* & s_7 & s_5^* \\ s_2 & s_1^* & s_6 & -s_8^* \\ s_4 & s_3^* & s_8 & s_6^* \end{bmatrix}$$

$$B_4 = \begin{bmatrix} s_1 & -s_2^* & s_5 & -s_7^* \\ s_4 & s_3^* & s_8 & s_6^* \\ s_2 & s_1^* & s_6 & -s_8^* \\ s_3 & -s_4^* & s_7 & s_5^* \end{bmatrix}$$

$$B_5 = \begin{bmatrix} s_1 & -s_2^* & s_5 & -s_7^* \\ s_3 & -s_4^* & s_7 & s_5^* \\ s_4 & s_3^* & s_8 & s_6^* \\ s_2 & s_1^* & s_6 & -s_8^* \end{bmatrix}$$

$$B_6 = \begin{bmatrix} s_1 & -s_2^* & s_5 & -s_7^* \\ s_4 & s_3^* & s_8 & s_6^* \\ s_3 & -s_4^* & s_7 & s_5^* \\ s_2 & s_1^* & s_6 & -s_8^* \end{bmatrix}$$

**11.** A transmission method in a transmitter using a plurality of transmit antennas, comprising the steps of:

encoding an input symbol sequence according to a predetermined space-time coding matrix;
selecting one of predetermined permutation matrices according to a predetermined formula; and
generating a plurality of symbol vectors by permuting the space-time coded symbols according to the selected permutation matrix.

**12.** The transmission method of claim 11, further comprising the step of mapping the plurality of symbol vectors to predetermined time intervals and predetermined subcarriers and transmitting the mapped symbol vectors through the transmit antennas.

**13.** The transmission method of claim 12, wherein the mapping step comprises the step of allocating odd-numbered symbols among four symbols forming each of the symbol vectors to two predetermined subcarriers in a first time interval and even-numbered symbols to the two subcarriers in a second time interval through orthogonal frequency division multiplexing (OFDM) modulation.

**14.** The transmission method of claim 11, wherein the permutation matrix is selected according to the index of a subcarrier.

**15.** The transmission method of claim 11, wherein the predetermined space-time coding matrix is

$$B = \begin{bmatrix} s_1 & -s_2^* & s_5 & -s_7^* \\ s_2 & s_1^* & s_6 & -s_8^* \\ s_3 & -s_4^* & s_7 & s_5^* \\ s_4 & s_3^* & s_8 & s_6^* \end{bmatrix}.$$

**16.** The transmission method of claim 11, wherein the selected permutation matrix is one of the following matrices

$$B_1 = \begin{bmatrix} s_1 & -s_2^* & s_5 & -s_7^* \\ s_2 & s_1^* & s_6 & -s_8^* \\ s_3 & -s_4^* & s_7 & s_5^* \\ s_4 & s_3^* & s_8 & s_6^* \end{bmatrix}$$

$$B_2 = \begin{bmatrix} s_1 & -s_2^* & s_5 & -s_7^* \\ s_2 & s_1^* & s_6 & -s_8^* \\ s_4 & s_3^* & s_8 & s_6^* \\ s_3 & -s_4^* & s_7 & s_5^* \end{bmatrix}$$

$$B_3 = \begin{bmatrix} s_1 & -s_2^* & s_5 & -s_7^* \\ s_3 & -s_4^* & s_7 & s_5^* \\ s_2 & s_1^* & s_6 & -s_8^* \\ s_4 & s_3^* & s_8 & s_6^* \end{bmatrix}$$

$$B_4 = \begin{bmatrix} s_1 & -s_2^* & s_5 & -s_7^* \\ s_4 & s_3^* & s_8 & s_6^* \\ s_2 & s_1^* & s_6 & -s_8^* \\ s_3 & -s_4^* & s_7 & s_5^* \end{bmatrix}$$

$$B_5 = \begin{bmatrix} s_1 & -s_2^* & s_5 & -s_7^* \\ s_3 & -s_4^* & s_7 & s_5^* \\ s_4 & s_3^* & s_8 & s_6^* \\ s_2 & s_1^* & s_6 & -s_8^* \end{bmatrix}$$

$$B_6 = \begin{bmatrix} s_1 & -s_2^* & s_5 & -s_7^* \\ s_4 & s_3^* & s_8 & s_6^* \\ s_3 & -s_4^* & s_7 & s_5^* \\ s_2 & s_1^* & s_6 & -s_8^* \end{bmatrix}$$

**17.** The transmission method of claim 11, wherein if the index of a logical data subcarrier is Nc (=1, 2, 3, ... number of total subcarriers), a permutation matrix $B_k$ is selected according to the following formula

$$B_k : k = mod(floor(Nc-1)/2,6)+1.$$

**18.** A rate 2 space-time encoding method in a transmitter with four transmit antennas, comprising:

generating a predetermined number of symbol sequences by spatially multiplexing input symbols;
generating a signal matrix by encoding the symbol sequences in an Alamouti scheme;
generating a plurality of antenna signals by permuting the signal matrix according to a permutation matrix selected by an index of a subcarrier; and
orthogonal frequency division multiplexing (OFDM)-modulating the plurality of antenna signals and transmitting OFDM-modulated signals through the transmit antennas.

**19.** The rate 2 space-time encoding method of claim 18, wherein the OFDM modulation step comprises the step of allocating odd-numbered symbols among four symbols forming each of the antenna signals to two predetermined adjacent subcarriers in a first time interval and even-numbered symbols to the two adjacent subcarriers in a second time interval.

**20.** The rate 2 space-time encoding method of claim 18, wherein the signal matrix is

$$B = \begin{bmatrix} s_1 & -s_2^* & s_5 & -s_7^* \\ s_2 & s_1^* & s_6 & -s_8^* \\ s_3 & -s_4^* & s_7 & s_5^* \\ s_4 & s_3^* & s_8 & s_6^* \end{bmatrix}.$$

**21.** The rate 2 space-time encoding method of claim 18, wherein if the index of a logical data subcarrier is Nc (=1, 2, 3, ... number of total subcarriers), a permutation matrix $B_k$ is selected according to the following formula

$$B_k : k = mod(floor(Nc-1)/2,6)+1$$

$$B_1 = \begin{bmatrix} s_1 & -s_2^* & s_5 & -s_7^* \\ s_2 & s_1^* & s_6 & -s_8^* \\ s_3 & -s_4^* & s_7 & s_5^* \\ s_4 & s_3^* & s_8 & s_6^* \end{bmatrix}$$

$$B_2 = \begin{bmatrix} s_1 & -s_2^* & s_5 & -s_7^* \\ s_2 & s_1^* & s_6 & -s_8^* \\ s_4 & s_3^* & s_8 & s_6^* \\ s_3 & -s_4^* & s_7 & s_5^* \end{bmatrix}$$

$$B_3 = \begin{bmatrix} s_1 & -s_2^* & s_5 & -s_7^* \\ s_3 & -s_4^* & s_7 & s_5^* \\ s_2 & s_1^* & s_6 & -s_8^* \\ s_4 & s_3^* & s_8 & s_6^* \end{bmatrix}$$

$$B_4 = \begin{bmatrix} s_1 & -s_2^* & s_5 & -s_7^* \\ s_4 & s_3^* & s_8 & s_6^* \\ s_2 & s_1^* & s_6 & -s_8^* \\ s_3 & -s_4^* & s_7 & s_5^* \end{bmatrix}$$

$$B_5 = \begin{bmatrix} s_1 & -s_2^* & s_5 & -s_7^* \\ s_3 & -s_4^* & s_7 & s_5^* \\ s_4 & s_3^* & s_8 & s_6^* \\ s_2 & s_1^* & s_6 & -s_8^* \end{bmatrix}$$

$$B_6 = \begin{bmatrix} s_1 & -s_2^* & s_5 & -s_7^* \\ s_4 & s_3^* & s_8 & s_6^* \\ s_3 & -s_4^* & s_7 & s_5^* \\ s_2 & s_1^* & s_6 & -s_8^* \end{bmatrix}$$

**22.** A transmission method in a transmitter using a plurality of transmit antennas, comprising the steps of:

selecting one of predetermined space-time coding matrices according to a predetermined formula;
generating a plurality of symbol vectors by encoding modulation symbols to be transmitted using the selected space-time coding matrix; and
mapping the plurality of symbol vectors to predetermined time intervals and predetermined subcarriers and transmitting the mapped symbol vectors through the transmit antennas.

**23.** The transmission method of claim 22, wherein the predetermined space-time coding matrices are

$$B_1 = \begin{bmatrix} s_1 & -s_2^* & s_5 & -s_7^* \\ s_2 & s_1^* & s_6 & -s_8^* \\ s_3 & -s_4^* & s_7 & s_5^* \\ s_4 & s_3^* & s_8 & s_6^* \end{bmatrix}$$

$$B_2 = \begin{bmatrix} s_1 & -s_2^* & s_5 & -s_7^* \\ s_2 & s_1^* & s_6 & -s_8^* \\ s_4 & s_3^* & s_8 & s_6^* \\ s_3 & -s_4^* & s_7 & s_5^* \end{bmatrix}$$

$$B_3 = \begin{bmatrix} s_1 & -s_2^* & s_5 & -s_7^* \\ s_3 & -s_4^* & s_7 & s_5^* \\ s_2 & s_1^* & s_6 & -s_8^* \\ s_4 & s_3^* & s_8 & s_6^* \end{bmatrix}$$

$$B_4 = \begin{bmatrix} s_1 & -s_2^* & s_5 & -s_7^* \\ s_4 & s_3^* & s_8 & s_6^* \\ s_2 & s_1^* & s_6 & -s_8^* \\ s_3 & -s_4^* & s_7 & s_5^* \end{bmatrix}$$

$$B_5 = \begin{bmatrix} s_1 & -s_2^* & s_5 & -s_7^* \\ s_3 & -s_4^* & s_7 & s_5^* \\ s_4 & s_3^* & s_8 & s_6^* \\ s_2 & s_1^* & s_6 & -s_8^* \end{bmatrix}$$

$$B_6 = \begin{bmatrix} s_1 & -s_2^* & s_5 & -s_7^* \\ s_4 & s_3^* & s_8 & s_6^* \\ s_3 & -s_4^* & s_7 & s_5^* \\ s_2 & s_1^* & s_6 & -s_8^* \end{bmatrix}$$

**24.** The transmission method of claim 23, wherein the selection step comprises the step of, if the index of a logical data subcarrier is Nc (=1, 2, 3, ... number of total subcarriers), selecting a permutation matrix $B_k$ according to the following formula

$$B_k : k = mod(floor(Nc-1)/2, 6) + 1 .$$

**25.** The transmission method of claim 23, wherein the mapping step comprises the step of allocating odd-numbered symbols among four symbols forming each of the symbol vectors signals to two predetermined subcarriers in a first time interval and even-numbered symbols to the two subcarriers in a second time interval through orthogonal frequency division multiplexing (OFDM) modulation.

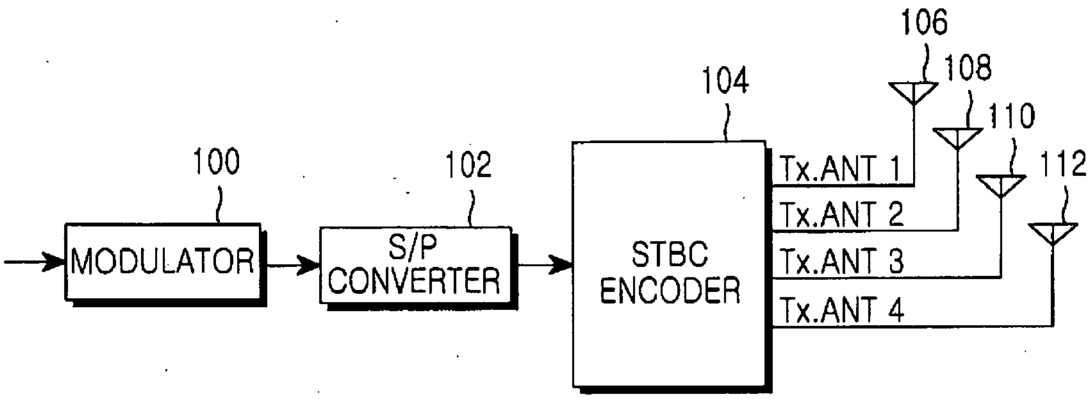


FIG.1
(PRIOR ART)

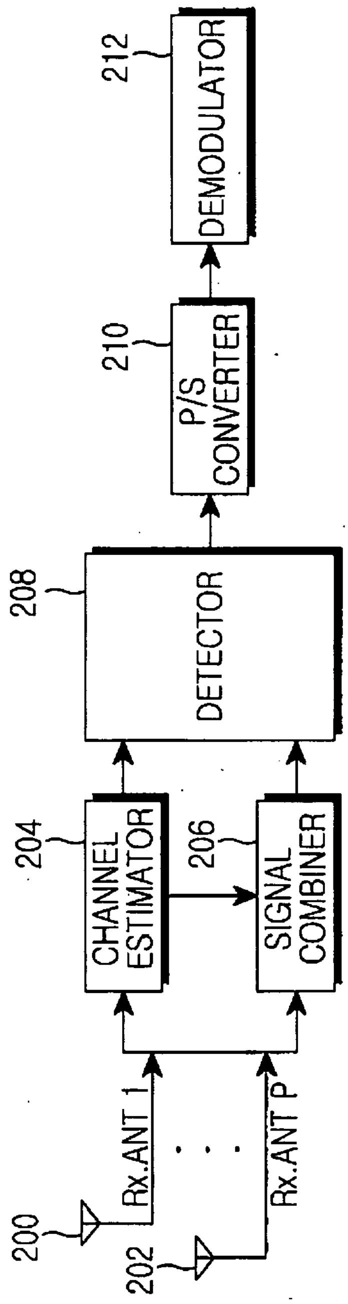


FIG.2
(PRIOR ART)

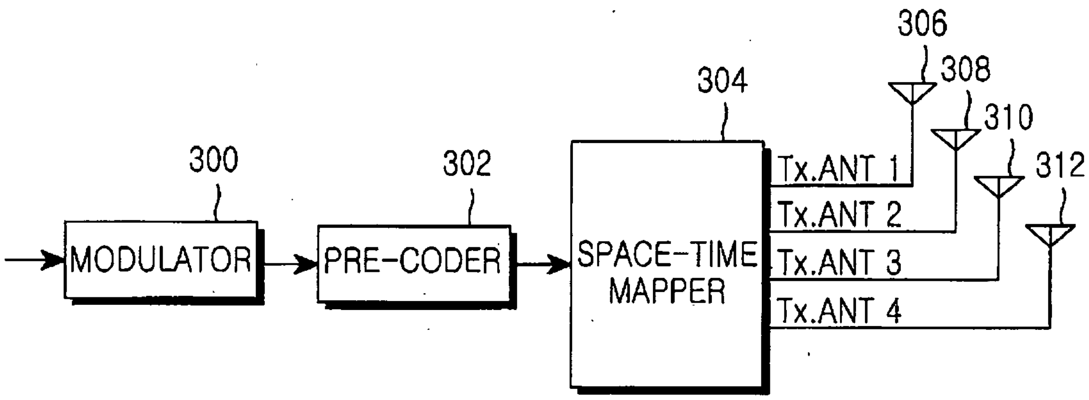


FIG.3
(PRIOR ART)

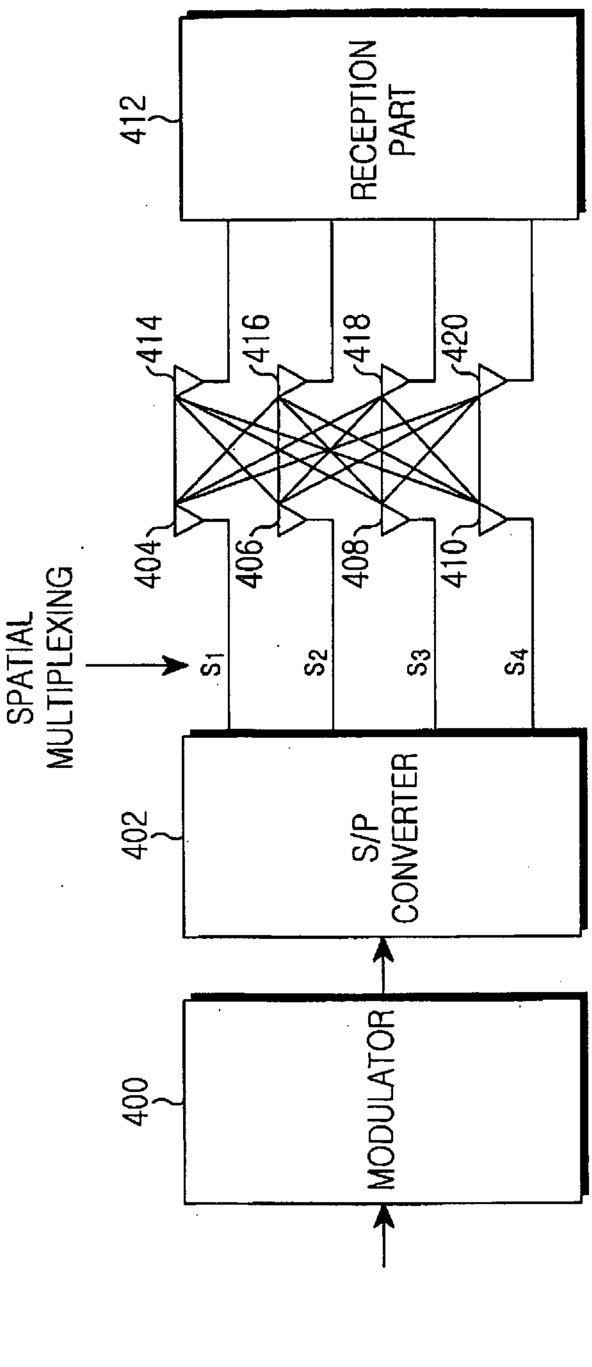


FIG.4
(PRIOR ART)

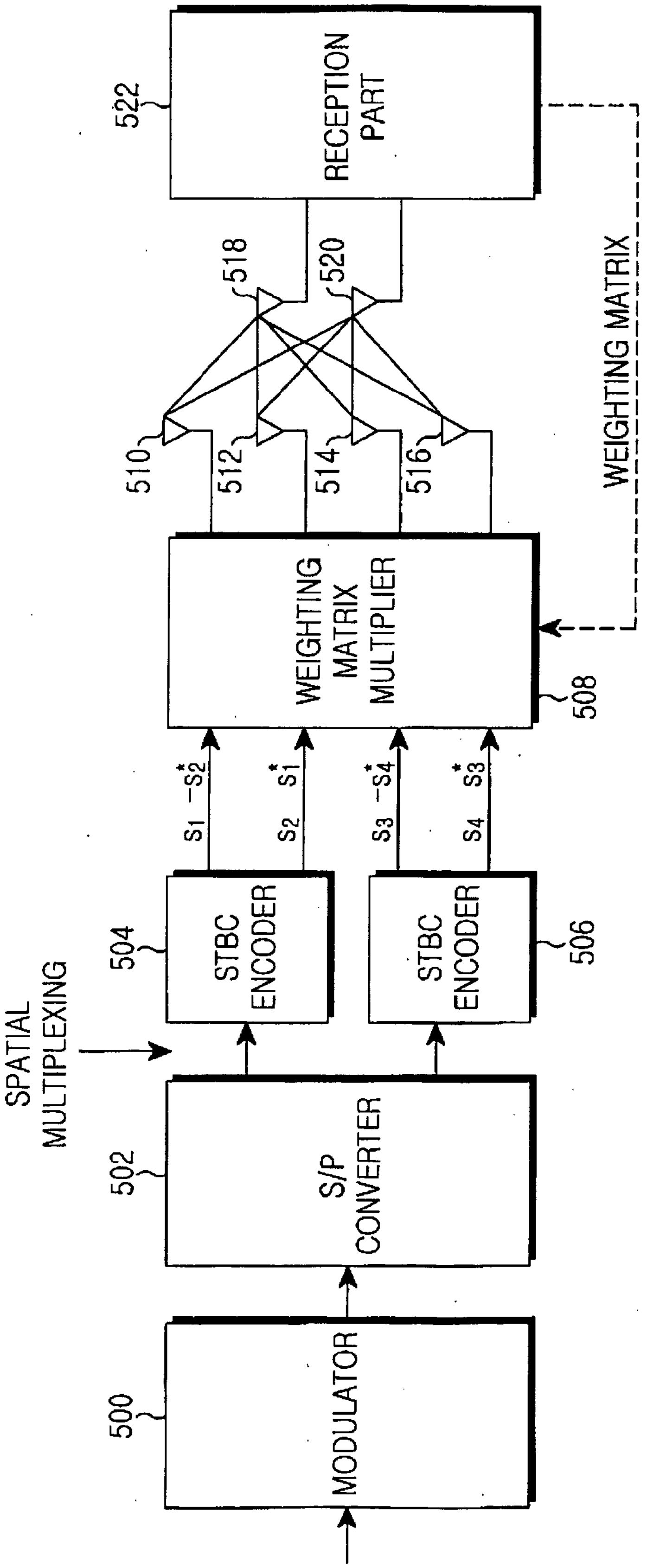


FIG.5
(PRIOR ART)

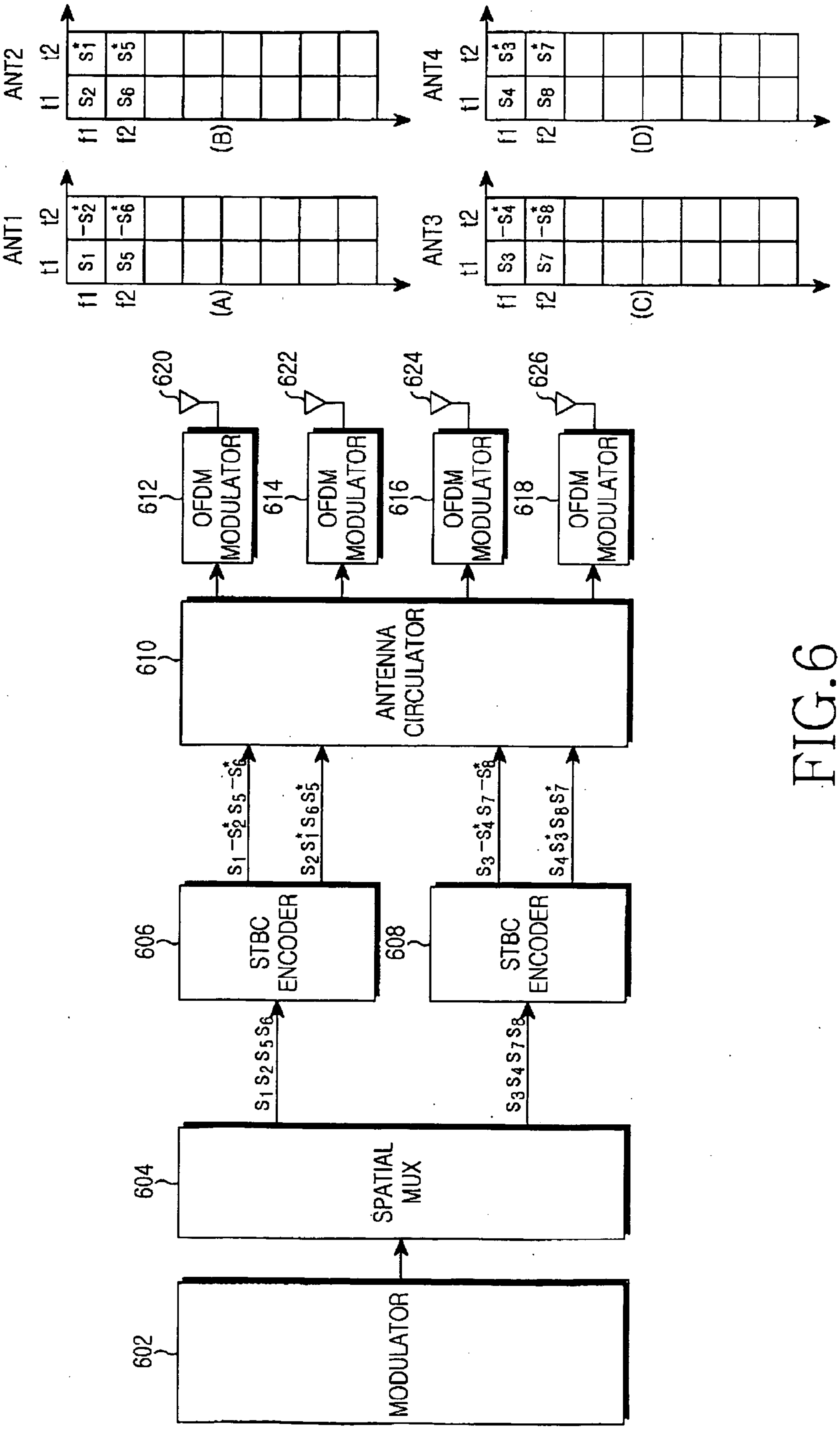
MODULATOR
602
SPATIAL MUX
604
STBC ENCODER
606
STBC ENCODER
608
ANTENNA CIRCULATOR
610
OFDM MODULATOR
612
614
616
618
620
622
624
626
ANT1
ANT2
ANT3
ANT4
t1
t2
f1
f2
(A)
(B)
(C)
(D)

FIG.6

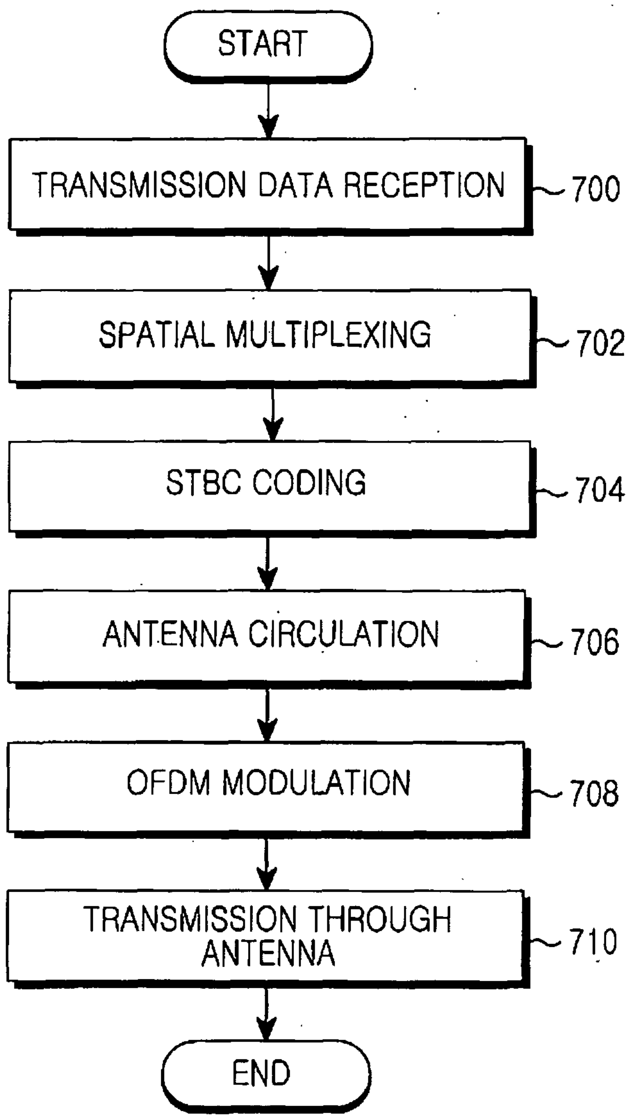
START
TRANSMISSION DATA RECEPTION
700
SPATIAL MULTIPLEXING
702
STBC CODING
704
ANTENNA CIRCULATION
706
OFDM MODULATION
708
TRANSMISSION THROUGH ANTENNA
710
END

FIG.7

European Patent Office

# EUROPEAN SEARCH REPORT

Application Number
EP 06 00 0335

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROUQUETTE-LEVEIL S ET AL: "Spatial division multiplexing of space-time block codes" COMMUNICATION TECHNOLOGY PROCEEDINGS, 2003. ICCT 2003. INTERNATIONAL CONFERENCE ON APRIL 9 - 11, 2003, PISCATAWAY, NJ, USA,IEEE, vol. 2, 9 April 2003 (2003-04-09), pages 1343-1347, XP010644098 ISBN: 7-5635-0686-1 | 1,4-6, 11,15,16 | H04L1/06 |
| Y | * page 1343, left-hand column, paragraph 3 * | 2,3, 7-10, 12-14, 17-25 | |
| | * page 1343, right-hand column, paragraph 2 - page 1344, left-hand column, paragraph 3; figure 1 * ----- | | |
| Y | US 2003/112745 A1 (ZHUANG XIANGYANG ET AL) 19 June 2003 (2003-06-19) | 2,3, 7-10, 12-14, 17-25 | TECHNICAL FIELDS SEARCHED (IPC) |
| | * paragraph [0021] - paragraph [0022] * ----- | | H04L |
| A | US 2003/073464 A1 (GIANNAKIS GEORGIOS B ET AL) 17 April 2003 (2003-04-17) * paragraph [0022] - paragraph [0026] * ----- | 1-25 | |
| A | US 5 153 541 A (JOHNSON ET AL) 6 October 1992 (1992-10-06) * column 3, line 47 - line 51 * ----- | 1-25 | |

The present search report has been drawn up for all claims

1

| Place of search | Date of completion of the search | Examiner |
|---|---|---|
| Munich | 14 March 2006 | Agudo Cortada, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 06 00 0335

This annex lists the patent family members relating to the patent documents cited in the above-mentioned European search report. The members are as contained in the European Patent Office EDP file on
The European Patent Office is in no way liable for these particulars which are merely given for the purpose of information.

14-03-2006

| Patent document cited in search report | Publication date | Patent family member(s) | Publication date |
|---|---|---|---|
| US 2003112745 A1 | 19-06-2003 | AU 2002366500 A1 | 30-06-2003 |
| | | WO 03052991 A2 | 26-06-2003 |
| US 2003073464 A1 | 17-04-2003 | NONE | |
| US 5153541 A | 06-10-1992 | CA 2066537 A1 | 21-11-1992 |
| | | GB 2257308 A | 06-01-1993 |
| | | HK 95996 A | 14-06-1996 |
| | | JP 6252605 A | 09-09-1994 |
| | | KR 257414 B1 | 15-05-2000 |

EPO FORM P0459

For more details about this annex : see Official Journal of the European Patent Office, No. 12/82